# EUROPEAN PATENT SPECIFICATION

(11) **EP 3 401 028 B1**
(45) Date of publication and mention of the grant of the patent: **19.10.2022**
(21) Application number: 17170863.9
(22) Date of filing: 12.05.2017
(51) Int. Cl.: B08B 9/20, B08B 9/44, B65G 43/08, B65G 47/88

(54) **A WASHING UNIT FOR TREATING EMPTY ARTICLES**
WASCHEINHEIT FÜR DIE BEHANDLUNG VON LEEREN ARTIKELN
UNITÉ DE LAVAGE POUR TRAITER DES ARTICLES VIDES

(43) Date of publication of application: 14.11.2018
(73) Proprietor: Gebo Packaging Solutions Italy SRL, 43126 Parma (IT)
(72) Inventor: BERZAGHI, Claudio, 37139 VERONA (IT)
(74) Representative: Sidel Group

(56) References cited:
- DE-A1- 3 136 510
- JP-A- H09 323 796
- JP-A- 2000 072 232
- US-A- 3 643 780

## Description

The present invention relates to a washing unit for treating empty articles.

The present invention also relates to a method of washing empty articles to be treated.

Washing machines are known with the purpose of cleaning the empty articles upstream of a filling and a labelling station, in which the articles are respectively filled with the pourable product and labelled with respective labels.

An example of washing unit is known, e.g. from EP 2 727 660 as well as from JP H09 323796.

The known washing unit comprises:
- a feeding system;
- a washing tunnel;
- a looped chain conveyor for advancing the articles along a closed path and which extends inside the washing tunnel from an inlet station to an outlet station; and
- a plurality of successive treatment zones through which the chain conveyor advances the articles.

In detail, the feeding system comprises a plurality of endless conveyors and a sequencing device interposed between the endless conveyors and the inlet station of the chain conveyor.

The endless conveyor defines respective channels along which respective rows of empty articles are advanced towards the inlet station of the chain conveyor.

The sequencing device withdraws, one after the other, the forward most empty articles from respective rows of the endless conveyors and convey them to the chain conveyor with a given rate to the inlet station.

The chain conveyor comprises a plurality of beams, which comprise, each, a plurality of seats aligned orthogonally to the channels.

In greater detail, each beam of the chain conveyor is fed with the forward most articles of respective rows to be washed at the inlet station of the washing tunnel by the feeding system and outputs washed articles to the outlet station.

The treatment zones are arranged between the inlet station and the outlet station.

In detail, the treatment zones comprise: a prewash zone, a first cleaning zone, a second cleaning zone and a final rinsing zone.

The prewash zone, the first cleaning zone, and the second cleaning zone comprise respective baths filled with a chemical agent and through which the articles are advanced.

The final rinsing zone comprises spraying means for spraying liquid chemical agents on the advancing articles.

Even well performing, the above-identified solution leaves room for improvement.

As a matter of fact, some articles can fall inside or break inside the channels of the endless conveyor.

Furthermore, some undesired objects can accumulate inside the channels of the endless conveyor.

There is therefore the risk that the fallen articles or the undesired objects can reach the chain conveyor and interfere with the proper operation of the washing tunnel, especially with the proper operation of the feeding system.

In these cases, it might be necessary to arrest the operation of the whole washing unit for a considerable amount of time, in order to remove the articles or the undesired objects from the washing tunnel.

At best, the operation of the washing unit continues but some channels are not operative and the corresponding seats are left empty.

This inevitably penalizes the throughput of the washing unit and of the filling/labelling unit, which are arranged downstream of the outlet station of the chain conveyor.

Accordingly, there is the risk that the speed of the chain conveyor is not optimal and cannot lead to the desired throughput.

A need is therefore felt within the industry for a feeding system for a washing unit with empty articles, which allows to eliminate the aforesaid drawback in a straightforward, low-cost manner.

It is an object of the present invention to provide a feeding system for a washing unit with empty articles, which meets the above requirements.

The aforementioned object is achieved by the present invention as it relates to a washing unit for treating empty articles, as claimed in claim 1.

The invention also relates to a method of washing empty articles, as claimed in claim 9.

One preferred embodiment is hereinafter disclosed for a better understanding of the present invention, by way of non-limitative example and with reference to the accompanying drawings, in which:
- Figure 1 is a lateral view of a washing unit for treating empty articles in accordance with the invention, with parts removed for clarity;
- Figure 2 is a perspective enlarged view of the washing unit of Figure 1, with parts removed for clarity; and
- Figures 3 to 7 show subsequent operative steps of some components of the washing unit of Figures 1 and 2.

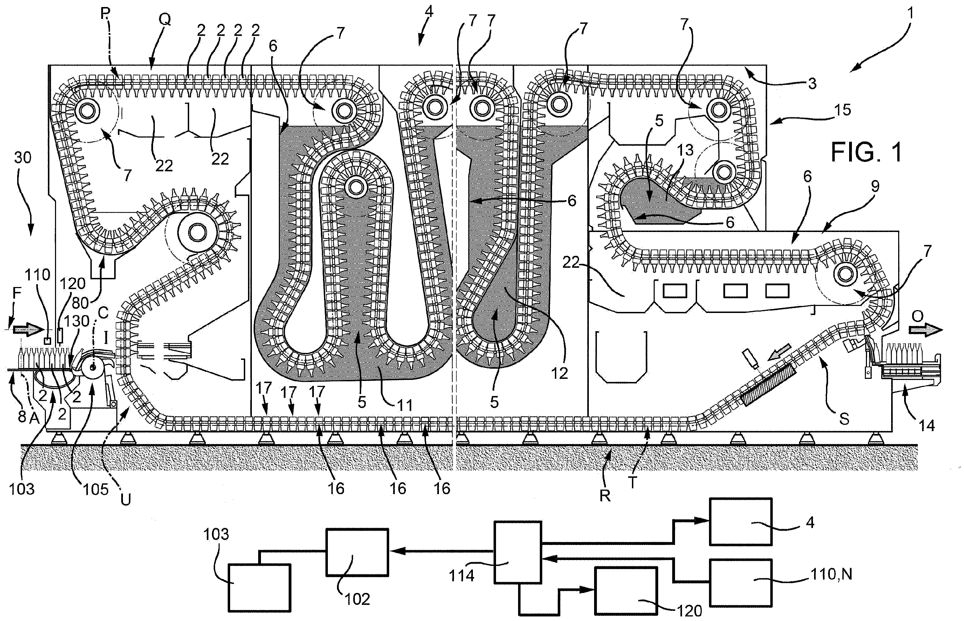

With reference to figure 1, numeral 1 indicates a washing unit for washing articles 2, in particular empty containers intended to be filled with a pourable product.

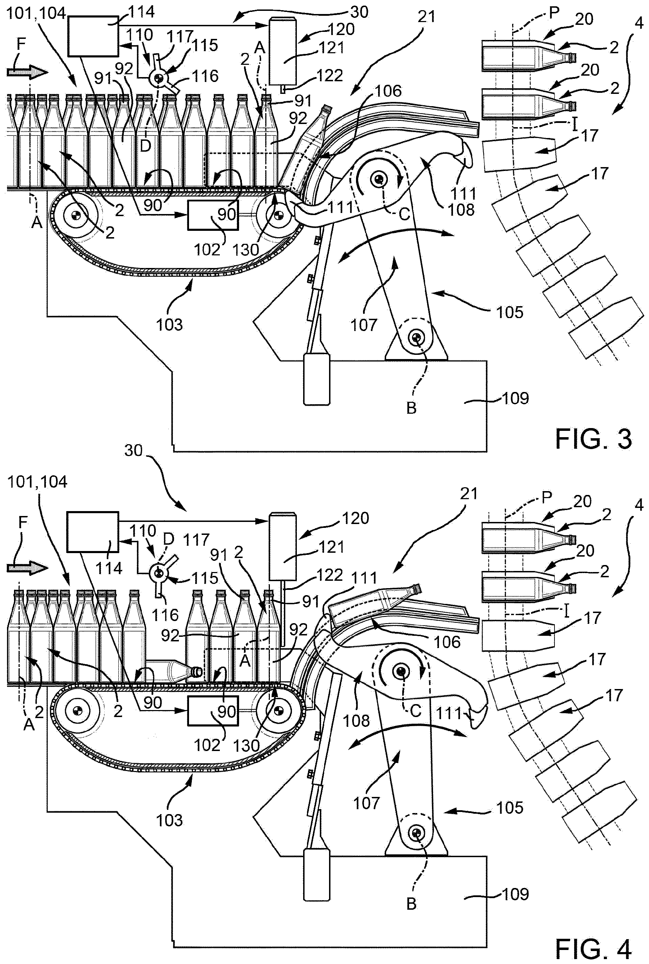

In detail, each article 2 extends along an axis A and comprises (Figures 3 to 7):
- a bottom portion 90;
- a neck portion 91; and
- a body 92.

Washing unit 1 substantially comprises (Figure 1):
- a washing tunnel 3, which is fed with articles 2 to be washed and in which articles 2 are washed;
- a chain conveyor 4 for advancing articles 2 inside washing tunnel 3 along a closed loop path P; and
- a plurality of treatment zones 5, which are arranged inside washing tunnel 3 and comprise, in the embodiment shown, respective tanks 6 filled with respective cleaning agent and through which chain conveyor 4 advances articles 2.

Washing unit 1 also comprises:
- a feeding system 8, which feeds a sequence of rows 101 of articles 2 to be cleaned to chain conveyor 4 along a direction F and to an inlet station I of washing tunnel 3; and
- an outfeed conveyor 14, which receives a sequence of rows of cleaned articles 2 from chain conveyor 4 at an outlet station 0 of washing tunnel 3.

When articles 2 are advanced along feeding system 8, axes A are vertical and direction F is horizontal and orthogonal to axes A of articles 2.

Feeding system 8 comprises, with special reference to Figures 3 to 7:
- a plurality of endless conveyors 103 (only one of which is shown in Figures 3 to 7) creating a plurality of channels 104 aligned along path P;
- a motor 102 (only schematically shown in Figures 3 to 7), which drives conveyors 103; and
- a sequencing device 105, which receives a plurality of rows 101 of articles 2 from relative conveyors 103 and feeds, one after the other, sequences 21 of articles 2 of each row 101 to inlet station I of washing tunnel 3.

In the embodiment shown, each sequence 21 is formed by only forward most article 2, with reference to the advancing direction of articles 2 parallel to direction F.

In detail, rows 101 are aligned parallel to direction F.

Sequencing device 105 comprises a frame 109.

Furthermore, sequencing device 105 comprises, for each channel 104,:
- a conveying surface 106, which extends from conveyor 103 to station I of washing tunnel 3 along an arch-shaped shape;
- a lever 107 which is hinged to frame 109 about an axis B; and
- a lever 108 which is hinged to lever 107 about an axis C parallel to axis B and comprises two end fingers 111 adapted to contact bottom portions of articles 2 and to thrust articles 2 along surface 106.

Axes B, C are, in the embodiment shown, parallel to one another.

Axes B, C are, in the embodiment shown, orthogonal to axis A and direction F.

Sequencing device 105 also comprises a pair of not shown actuators for causing the rotation of lever 107 with respect to frame 109 about axis B and the rotation of lever 108 with respect to lever 107 about axis C.

Thanks to the presence of levers 107, 108 hinged to one another, each sequencing device 105 can transfer, one after the other, forwardmost article 2 of respective row 101 towards inlet station I of washing tunnel 3 with the right position, horizontal in the embodiment shown.

In particular, sequencing device 105 can transfer article 2 of respective channel 104 along a not circular arch.

Path P comprises a work branch Q and a return branch R.

Work branch Q extends from inlet station I to outlet station 0 while return branch R extends from outlet station 0 to return station I.

In the embodiment shown, path P lies on a vertical plane, and conveyors 8, 14 advance articles 2 along a horizontal direction.

Furthermore, path P lies in a plane parallel to direction F and orthogonal to axes A, B, C.

In particular, treatment zones 5 comprise a prewash zone, a first cleaning zone, a second cleaning zone.

The prewash zone, the first cleaning zone, the second cleaning zone comprise respective baths 11, 12, 13 filled with a cleaning agent.

For a better understanding, in Figure 1, the volume occupied by the cleaning solution has been highlighted by colouring the relative cross section in grey.

Due to the temperature of the cleaning agent, articles 2 are heated up as they travel inside bath 11, 12, 13.

Treatment zones 5 also comprises a rinsing zone 9, which is aimed to remove the chemical agents out of articles 2 and to cool them down. Rinsing zone 9 comprises a plurality of sprinkling devices acting one after the other on articles 2.

Chain conveyor 4 advances articles 2 along work branch Q and returns without articles 2 along return branch R.

Bath 11, 12, 13 and rinsing zone 9 are arranged, in this succession, along work branch Q of path P.

As evident from Figure 1, as they are advanced along work branch Q by chain conveyor 4, articles 2 can be arranged upside-down.

Furthermore, chain conveyor 4 comprises, along work branch Q:
- a plurality of driven and driving wheels 7, which mesh with conveyor chain 4 and cause the movement thereof along path P; and
- a plurality of stationary supporting structures 22, which interact with conveyor chain 4 to prevent the bending thereof.

Return branch R of path P comprises, proceeding from station 0 to station I:
- a descending portion S;
- a substantially horizontal portion T; and
- an ascending portion U.

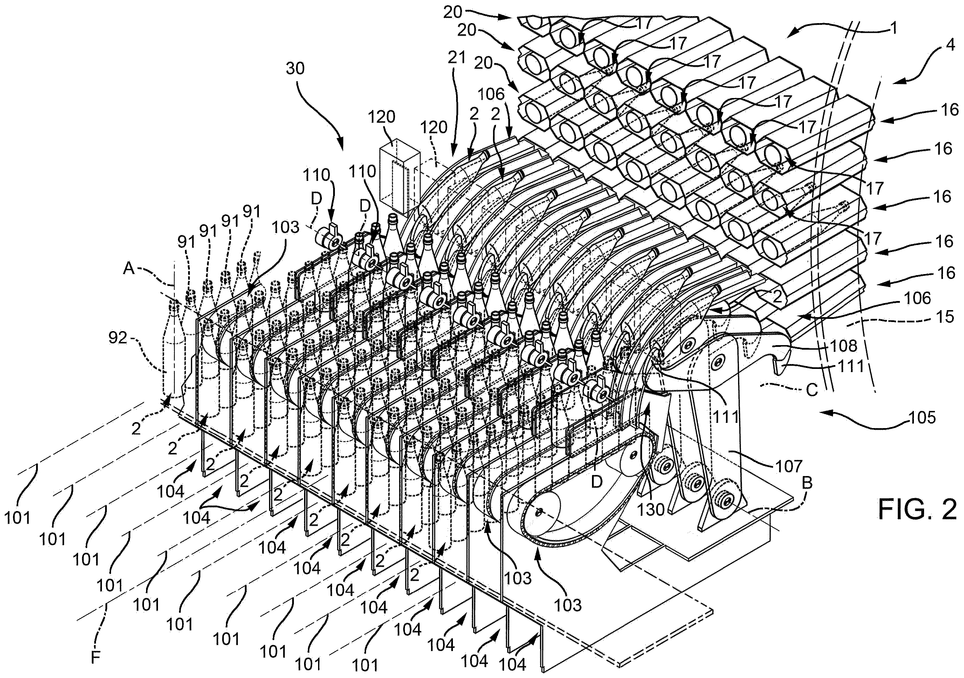

As shown in Figure 1, chain conveyor 4 comprises:
- a pair of chains 15 (only one of which is shown in Figure 2) elongated parallel to path P and parallel to one another; and
- a plurality of subsequent conveying beams 16, which extend between chains 15 and orthogonally to chains 15 and path P.

Chain conveyor 4 further comprises a stationary guide 80 for supporting chains 15.

Guide 80 is shaped in the same way as path P.

Each beam 16 comprises a plurality of seats 17 for holding relative articles 2.

Each beam 16 is adapted to receive forwardmost articles 2 of respective rows 101 from sequencing device 105.

In particular, articles 2 of each row 101 are transferred by sequencing device 105 to respective seats 17 of beam 16 travelling at inlet station I.

Seats 17 are aligned orthogonally to path P. Accordingly, also articles 2, when conveyed along work branch Q, are aligned onto relative beams 16 orthogonally to path P to form respective columns 20.

Advantageously, washing unit 1 comprises:
- a sensing group 30 adapted to detect a number of seats 17, which do not receive articles 2; and
- a control unit 114 operatively connected with sensing group 30 and chain conveyor 4 and programmed for adjusting the speed of chain conveyor 4 on the basis of number N, so as to keep constant the throughput of washing unit 1.

In greater detail, sensing group 30 is adapted to detect a number N of feeding channels 104 prevented at inlet station I from feeding chain conveyor 4 with the forward most article 2.

Other solutions may be implemented for monitoring the content of seats 17 right downstream of inlet station I.

In detail, sensing group 30 may comprise (Figures 3 to 7) :
- a plurality of sensors 110, which are configured to detect the presence and/or the correct position of articles 2 on conveyors 103 and are configured to generate respective signals in case of absence of articles 2 and/or wrong positioning of articles 2; and
- a plurality of stopping devices 120, which are operatively connected to respective sensors 110 and can be displaced in a stop position in which they prevent articles 2 from advancing on conveyors 103 if relative sensors 110 generate the relative signals.

In particular, each sensor 110 is operatively connected to a respective stopping device 120.

Furthermore, each sensor 110 is configured to detect the correct position of articles 2 on a respective channel 104 of relative conveyor 103 and to generate respective signals in case of absence of articles 2 and/or wrong positioning of articles 2 on respective channel 104.

Each stopping device 120 can be displaced:
- either in a respective rest position, in which it allows articles 2 to advance on respective channel 104 of relative conveyor 103; or
- in the respective stop position, in which it prevents articles 2 from advancing on respective channel 104 of relative conveyor 103.

Each stopping device 120 is arranged downstream of relative sensor 110, proceeding along direction F parallel to the advancing sense of relative conveyor 103, i.e. towards sequencing device 105.

Each stopping device 120 is arranged at an end 130 of respective channel 104 adjacent to sequencing device 105.

Accordingly, each stopping device 120 prevents, when set in relative stop position, article 2 from reaching sequencing device 105 and, therefore, from reaching inlet station I of chain conveyor 4.

In greater detail, control unit 114 is operatively connected with sensors 110 and stopping devices 120.

Furthermore, control unit 114 is configured to displace each stopping device 120 in the stop position if corresponding sensor 110 generates respective signal, i.e. if corresponding sensor 110 detects the absence or the incorrect position of one article 2 on respective channel 104 of respective conveyor 103.

It is important to point out that, due to the fact that stopper devices 120 stop articles 2 at end 130 adjacent to sequencing device 105, articles 2 are substantially prevented from falling on channels 104 without being removed upstream of sequencing device 105.

Control unit 114 is also configured to displace each stopping device 120 in the rest position if corresponding sensor 110 does not generate respective signal, i.e. if corresponding sensor 110 detects the correct position of article 2 on respective channel 104 of relative conveyor 103.

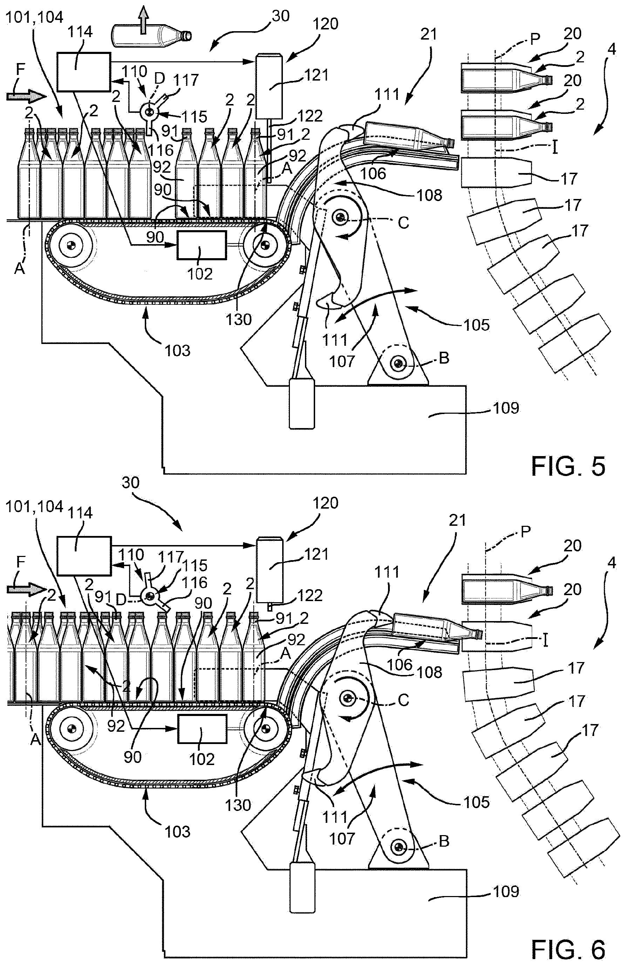

Control unit 114 is configured to generate a warning signal, preferably an acoustic signal, when one of sensors 110 has detected the absence of at least one article 2 and/or wrong positioning of at least one article 2 on respective channel 104 (Figure 5).

In this case, respective stopping device 120 is set in the relative stop position, and an operator may remove article 2 from respective channel 104.

After the removal, control unit 114 moves back respective stopping device 120 in the relative rest position.

Control unit 114 is also programmed to arrest one or more conveyors 103 in cases relative sensors 110 have detected the absence of at least one articles 2 and/or wrong positioning of article 2 on a number N of channels 104 greater than a threshold value N₀.

In the following of the present description, only one sensor 110 and only one relative stopping device 120 are described with reference to only one relative conveyor 103, being all sensors 110 and stopping devices 120 identical to one another.

In the embodiment shown, sensor 110 is a contact sensor, which contacts articles 2 when the latter are arranged in the correct positions on relative conveyor 103 and remains detached from articles 2 when the latter are arranged in the wrong positions and/or are missing on conveyor 103.

In particular, sensor 110 may be a presence detector, for example an inductive sensor.

Each sensor 110 may comprise, in particular, (Figures 3 to 7):
- a wheel 115 hinged about an axis D orthogonal to direction P with respect to a fixed structure; and
- a pair of fingers 116, 117 radially protruding from wheel 115 on the opposite radial side with respect to axis B.

Axis D is, in the embodiment shown, parallel to axis A, B.

When articles 2 are arranged in the correct position on conveyor 103, sensor 110 is normally set in a first position (Figure 3, 6 and 7) in which finger 116 is sloped with respect to axis A and extends on the side of sequencing device 105.

In this first position, finger 116 cooperates, on the opposite side thereof with respect to sequencing device 105, with neck portions 91 of articles 2 travelling on conveyor 103.

When articles 2 are arranged in the wrong position or are missing on conveyor 103, sensor 110 is set in a second position (Figures 4 and 5) in which finger 116 is parallel to axis A. Thus, on the basis of the position of finger 116 it is possible to detect whether or not articles 2 are correctly positioned on conveyor 103.

Stopping device 120 comprises a housing 121 fitted to a fixed structure and piston 122 which protrudes from housing 121 and can be extended or retracted vertically towards and away from conveyor 103.

When stopping device 120 is in the rest position, piston 122 is retracted and remains detached from articles 2 travelling on conveyor 103 (Figures 3, 6 and 7).

When stopping device 120 in the stop position, piston 122 is extended and contacts body 92 of articles 2 travelling on conveyor 103 (Figures 4 and 5). Preferably, piston 122 contacts a lateral side of the downstreamest article 2.

Control unit 114 is also operatively connected with a not-shown driving unit of chain conveyor 4 to adjust the speed of chain conveyor 4, on the basis of number N of channels 104 along which articles 2 are prevented from advancing by respective stopping devices 120 set in respective stop positions (Figure 1).

In greater detail, control unit 114 is programmed to adjust the speed of chain conveyor 4 in such a way that the throughput of washed articles 2 remains constant even if articles 2 are prevented from advancing along one or more channels 104, and one or more seats 17 can therefore neither receive nor deliver relative articles 2.

In case number N of not-working seats 17 (and, therefore, the number of channels 104 along which articles 2 are prevented from travelling) increases, control unit 114 increases the speed of chain conveyor 4.

In case this number N decreases, control unit 114 decreases the speed of chain conveyor 4.

It is understood that number N mirrors the number of non-working seats 17 in most of the cases.

Control unit 114 is also operatively connected to motor 102 and to chain conveyor 4.

In particular, control unit 114 is programmed to adjust the speed of chain conveyor 4, as soon as empty seats 17, corresponding to number of channels 104 which are not feeding articles 2, reach outlet station 0.

In this way, it is ensured that when washing unit 1 begins to reduce its throughput, the speed of chain conveyor 4 is adjusted.

The operation of washing unit 1 is described in detail in the following, with reference to only one sensor 110 and stopping device 120 arranged in only one channel 104 of relative only one conveyor 103.

Feeding system 8 advances a plurality of rows 101 of articles 2 to be cleaned inside channel 104 defined by conveyor 103 and parallel to direction F.

In this situation, stopping device 120 is set in the rest position, in which it allows articles 2 to advance on channel 104.

More precisely, piston 122 is retracted and is detached from necks 91 of articles 2 travelling on conveyor 103.

Articles 2 properly positioned are arranged with respective axes A vertical, orthogonal to direction F, and with respective bottoms 90 lying on conveyor 103.

Articles 2 not properly positioned are, for example, arranged with respective axes A parallel to direction F.

Furthermore, some undesired objects can accumulate on conveyor 103.

Sensor 110 detects the correct/incorrect position of articles 2 on channel 104 as well as the presence/absence of articles 2.

In particular, in case articles 2 are correctly positioned on conveyor 103, sensor 110 is set in the first position shown in Figure 3.

As a matter of fact, articles 2 keep finger 116 sloped with respect to vertical axis.

In case articles 2 are not properly positioned on conveyors 103, sensor 110 is set in the second position shown in Figures 2, 4 and 5 and generates the signal.

As a matter of fact, not properly positioned articles 2 do not contact fingers 116, which falls under the gravity action up to when it is set parallel to vertical axis.

The same happens in case undesired objects are smaller or bigger than articles 2 set on conveyor 103.

If sensor 110 generates the signal, control unit 114 sets stopping device 120 in the stop position (Figure 4), in which piston 122 is extended and contacts body 92 of articles 2.

In this way, the flow of articles 2 along conveyor 103 is arrested (Figure 5) at end 130 and relative seats 17 of beams 16 are not fed with stopped articles 2. Thus, relative seats 17 travel empty in washing unit 1.

At this stage, the operator removes articles 2 from channel 104 and control unit 114 sets stopping device 120 again in the rest position. The flow of articles 2 along conveyor 103 can thus start again (Figure 6).

It is important to stress that no fallen article 2 can be conveyed to sequencing device 105 and, therefore, to inlet station I, due to the fact that stopper 120 stops articles 2 at end 130.

Control unit 114 is also programmed to arrest conveyor 103, in case number of sensors 110 generating respective signals is greater than a threshold value N₀.

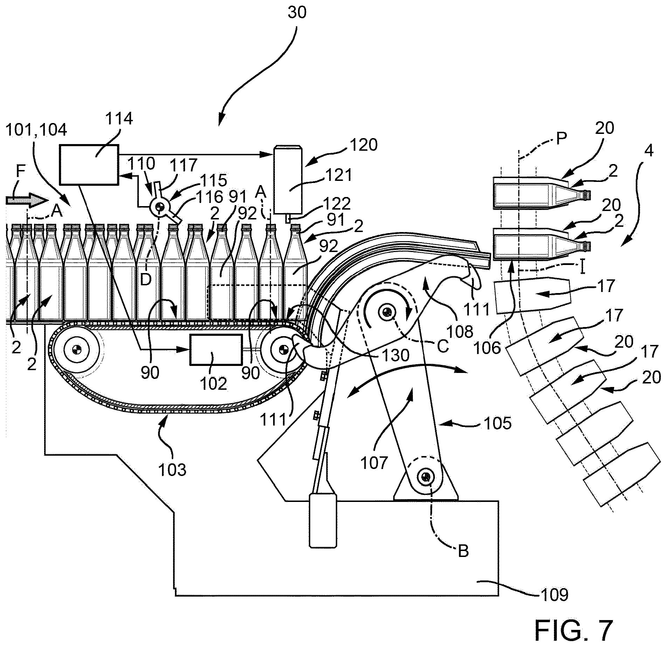

Sequencing device 105 receives again articles 2 from channels 104 and feeds them to inlet station I of washing tunnel 3 (Figure 7).

Beams 16 of chain conveyor 4 withdraw respective columns 20 of articles 2 at inlet station I from sequencing device 105, advance articles 2 inside washing tunnel 3 along work branch Q, discharge column 20 of cleaned articles 2 at outlet station O onto outfeed conveyor 14 and return along return branch R without articles 2.

Due to the fact that the advancement of articles 2 along number N of channels 104 is prevented by respective stopping devices 120, corresponding seats 17 of beams 16 are empty, as they travel along path P.

Control unit 114 adjusts the speed of chain conveyor 4 on the basis of number of empty seats 17, namely number N, to control the actual throughput, for example in order to keep constant the throughput of washing unit 5.

In particular, control unit 114 evaluates number N of channels 104 along which articles 2 are prevented from advancing and calculates the time necessary to empty seats 17 to reach outlet station 0.

In case number N is increasing (or decreasing), control unit 114 increases (or decreases) the speed of chain conveyor 4. As a matter of fact, if number N is increasing the number of articles 2 actually conveyed by chain conveyor 4 decreases and vice versa.

In particular, control unit 114 also adjusts the speed of chain conveyor 4 when empty seats 17 reach outlet station 0.

From an analysis of the features of washing unit 1 and of method according to the present invention, the advantages it allows to obtain are apparent.

In particular, washing unit 1 comprises:
- sensing group 30, which is configured to detect number N of channels 104 actually not feeding chain conveyor 4 with forwardmost articles 2 of relative rows 101; and
- control unit 114, which is programmed to adjust the speed of chain conveyor 4 on the basis of number N, so as to keep constant the throughput of washing unit 1.

In this way, the risk that fallen articles 2 reach inlet station I undetected by sensing group 30 is dramatically reduced, in comparison with the known solution described in the introductory part of the present application.

Accordingly, the speed of chain conveyor 4 can be adjusted on the basis of the correct number of missing articles 2, thus leading to a more controlled value of the final throughout of washing unit 1.

Furthermore, in case number N is such that the adjusted speed should overcome a threshold value, a warning signal is generated. As a matter of fact, in such conditions, the effective cleaning of articles 2 can no longer be ensured.

Sensing group 30 may also comprise stopping devices 120, which stop respective forwardmost articles 2 at ends 130 of relative channels 104 immediately adjacent to sequencing device 105, whenever necessary.

In this way, there is substantially no risk that articles 2 can fall on channels 104 without being rearranged by the operated in the correct position.

Accordingly, there is substantially no risk that the actual number of empty seats 17 is greater than the number of empty seats 17 calculated by control unit 114 on the basis of the signal generated by sensors 120.

As a result, there is substantially no risk that the adjusted speed of chain conveyor 14 does not correspond to the speed required to reach the targeted throughput of washing unit 1.

Clearly, changes may be made to washing unit 1 and method as described and illustrated herein without, however, departing from the scope of protection as defined in the accompanying claims.

## Claims

1. A washing unit (1) for treating empty articles (2), comprising:
- a plurality of feeding channels (104) for advancing respective rows (101) formed each of a respective plurality of said empty articles (2); and
- a chain conveyor (4) with seats (17) and cyclically movable between an inlet station (I) at which said seats (17) are fed, in use, by said feeding channels (104) with respective sequences (21) of one or more said empty articles (2) to be washed and an outlet station (O) at which it discharges, in use, said washed empty articles (2) ;
- a sensing group (30) for sensing the number of seats (17) which do not receive said articles (2);
**characterized by** comprising:
- a control unit (114) operatively connected with said sensing group (30) and said chain conveyor (4) and programmed for adjusting the speed of said chain conveyor (4) on the basis of said number of seats (17) which do not receive said articles (2), preferably so as to keep constant the throughput of said washing unit (1).

2. The washing unit of claim 1, **characterized in that** said sensing group (30) is adapted to detect a quantity associated to the number (N) of feeding channels (104) prevented, in use, at said inlet station (I) from feeding said chain conveyor (4) with said respective sequence (21).

3. The washing unit of claim 1 or 2, **characterized in that** said control unit (114) is configured to generate a warning signal, in case the speed of said chain conveyor (4) needed for keeping constant said throughput is greater than a threshold value.

4. The washing unit of any one of the foregoing claims, **characterized in that** said control unit (114) is configured to continuously adjust the speed of said chain conveyor (14).

5. The washing unit of any one of the foregoing claims, **characterized in that** said sensing group (30) comprises:
- a plurality of sensors (110), which are configured to detect the presence and/or the correct position of said empty articles (2) on said channels (104) and are configured to generate respective said signals in case of absence of said empty articles (2) and/or wrong position of said empty articles (2); and
- a plurality of stoppers (120), which are operatively connected to respective said sensors (110) and can be displaced in respective stop positions, in which they prevent said empty articles (2) from advancing on said respective channels (104) if respective said sensors (110) generate respective said signals;
said sensors (110) and said stoppers (120) being operatively connected to said control unit (114).

6. The washing unit of any one of the foregoing claims, **characterized by** comprising a sequencing device (105) which is adapted to separate said sequences (21) from said rows (101) and to convey said sequences (21) to said inlet station (I).

7. The washing unit of claim 6, when depending on claim 5, **characterized in that** each said stopper (120) is configured to arrest said empty articles (2) of said respective row (101) at an end (130) of said respective channel (104) adjacent to said sequencing device (105).

8. The washing unit of claim 7, **characterized in that** each said sequence (21) is formed by only a forwardmost empty article (2) of relative said row (101), with reference to the advancing direction of said articles (2) on said relative channel (104);
said chain conveyor (4) comprising a plurality of seats (17) which may be fed with respective forwardmost empty articles (2) of respective channels (104), with reference to the advancing direction of said empty articles (2) on said respective channels (104); and
at least one of said seat (17) travelling, in use, empty in case it is not fed with said respective empty article (2);
said control unit (114) being programmed to adjust said speed of said chain conveyor (4) as soon as said at least one empty seat (17), corresponding to channel (104) which are not feeding articles (2) , reach said outlet station (O).

9. A method of washing a plurality of empty articles (2), comprising the steps of:
i) advancing a plurality of rows (101) of empty articles (2) along respective feeding channels (104);
ii) cyclically conveying said empty articles (2) to be washed between an inlet station (I) and an outlet station (O) by means of a chain conveyor (4) with seats (17); and
iii) feeding said seats (17) of said chain conveyor (4) at said inlet station (I) with respective sequences (21) of one or more said empty articles (2);
iv) detecting the number of said seats (17) which do not receive said articles (2);
**characterized by** comprising the steps of:
v) adjusting the speed of said chain conveyor (4) on the basis of said number of seats (17) which do not receive said articles (2), preferably so as to keep constant the throughput of said washing unit (1).

10. The method of claim 9, **characterized by** comprising the step vi) of detecting a quantity associated to the number (N) of feeding channels (104) prevented at said inlet station (I) from feeding said chain conveyor (4) with respective sequences (21) of one or more said empty articles (2).

11. The method of claim 9 or 10, **characterized by** comprising a step vii) of generating a warning signal in case the speed of said chain conveyor (4) is greater than a threshold value.

12. The method of any one of claims 9 to 11, **characterized by** comprising a step viii) of continuously adjusting said speed.

13. The method of any one of claims 9 to 12, **characterized in that** said step iv) comprises the steps of:
ix) detecting the presence and/or the correct position of said empty articles (2) on said channels (104) and generating relative signals in case of absence of said empty articles (2) and/or wrong position of said empty articles (2); and
x) preventing said empty articles (2) from advancing on said respective channels (104) if said signals are generated.

14. The method of any one of claim 9 to 13, **characterized by** comprising the step xi) of separating said sequences (21) from said rows (101) and to convey said sequences to said inlet station (I).

15. The method of claim 14, when depending on claim 13, **characterized in that** said step xi) is carried out at an end (130) of said respective channel (104) adjacent to said sequencing device (105).

16. The method of claim 15, **characterized in that** said step iii) comprises a step xii) of feeding said chain conveyor (4) at said inlet station (I) with said sequences (21) formed of said forwardmost empty articles (2) of said rows (101), proceeding according to the advancing direction of said empty articles (2) along said channels (104);
said method further comprising the steps of:
xiii) feeding said forwardmost articles (2) set in said correct position to respective seats (17) of said chain conveyor (104);
xiv) conveying as empty at least one said seat (17) if at least one corresponding forwardmost empty article (2) is prevented from advancing on said conveyor (103); and
xv) adjusting said speed as soon as said empty seat (17), corresponding to channel (104) which are not feeding articles (2), reach said outlet station (O).

## Patentansprüche

1. Wascheinheit (1) für die Behandlung von leeren Artikeln (2), umfassend:
- eine Vielzahl von Zuführkanälen (104) zum Vorwärtsbewegen entsprechender Reihen (101), die jeweils aus einer entsprechenden Vielzahl der leeren Artikel (2) gebildet werden; und
- einen Kettenförderer (4) mit Sitzen (17), der zyklisch zwischen einer Einlassstation (I), an der die Sitze (17) beim Betrieb durch die Zuführkanäle (104) mit entsprechenden Sequenzen (21) eines oder mehrerer der zu waschenden leeren Artikel (2) beschickt werden, und einer Auslassstation (O), an der er beim Betrieb die gewaschenen leeren Artikel (2) ausgibt, bewegbar ist;
- eine Erfassungsgruppe (30) zum Erfassen der Anzahl der Sitze (17), die die Artikel (2) nicht empfangen;
**gekennzeichnet durch** das Umfassen:
- einer Steuereinheit (114), die betriebsfähig mit der Erfassungsgruppe (30) und dem Kettenförderer (4) verbunden und dazu programmiert ist, die Geschwindigkeit des Kettenförderers (4) basierend auf der Anzahl der Sitze (17), die die Artikel (2) nicht empfangen, vorzugsweise so einzustellen, dass der Durchsatz der Wascheinheit (1) konstant gehalten wird.

2. Wascheinheit gemäß Anspruch 1, **dadurch gekennzeichnet, dass** die Erfassungsgruppe (30) dazu eingerichtet ist, eine der Anzahl (N) von Zuführkanälen (104) zugeordnete Größe zu erfassen, die beim Betrieb an der Einlassstation (I) daran gehindert werden, den Kettenförderer (4) mit der entsprechenden Sequenz (21) zu beschicken.

3. Wascheinheit gemäß Anspruch 1 oder 2, **dadurch gekennzeichnet, dass** die Steuereinheit (114) dazu ausgelegt ist, ein Warnsignal zu erzeugen, falls die zum Konstanthalten des Durchsatzes erforderliche Geschwindigkeit des Kettenförderers (4) größer als ein Schwellenwert ist.

4. Wascheinheit gemäß einem der vorhergehenden Ansprüche, **dadurch gekennzeichnet, dass** die Steuereinheit (114) dazu ausgelegt ist, die Geschwindigkeit des Kettenförderers (14) kontinuierlich anzupassen.

5. Wascheinheit gemäß einem der vorhergehenden Ansprüche, **dadurch gekennzeichnet, dass** die Erfassungsgruppe (30) umfasst:
- eine Vielzahl von Sensoren (110), die dazu ausgelegt sind, das Vorhandensein und/oder die korrekte Position der leeren Artikel (2) auf den Kanälen (104) zu erfassen, und dazu ausgelegt sind, im Falle des Fehlens der leeren Artikel (2) und/oder einer falschen Position der leeren Artikel (2) entsprechende Signale zu erzeugen; und
- eine Vielzahl von Stoppern (120), die betriebsfähig mit den entsprechenden Sensoren (110) verbunden sind und in entsprechende Stopp-Positionen verschoben werden können, in denen sie die leeren Artikel (2) daran hindern, sich auf den entsprechenden Kanälen (104) vorwärts zu bewegen, falls die entsprechenden Sensoren (110) die entsprechenden Signale erzeugen;
wobei die Sensoren (110) und die Stopper (120) betriebsfähig mit der Steuereinheit (114) verbunden sind.

6. Wascheinheit gemäß einem der vorhergehenden Ansprüche, **dadurch gekennzeichnet, dass** sie eine Sequenziervorrichtung (105) umfasst, die dazu eingerichtet ist, die Sequenzen (21) von den Reihen (101) zu trennen und die Sequenzen (21) zur Einlassstation (I) zu befördern.

7. Wascheinheit gemäß Anspruch 6 bei Abhängigkeit von Anspruch 5, **dadurch gekennzeichnet, dass** jeder Stopper (120) dazu ausgelegt ist, die leeren Artikel (2) der entsprechenden Reihe (101) an einem Ende (130) des entsprechendem Kanals (104) angrenzend an die Sequenziervorrichtung (105) festzuhalten.

8. Wascheinheit gemäß Anspruch 7, **dadurch gekennzeichnet, dass** jede der Sequenzen (21) nur aus einem vordersten leeren Artikel (2) der entsprechenden Reihe (101), bezogen auf die Vorwärtsbewegungsrichtung der Artikel (2) in dem entsprechenden Kanal (104), gebildet wird;
wobei der Kettenförderer (4) eine Vielzahl von Sitzen (17) umfasst, die mit entsprechenden vordersten leeren Artikeln (2) von entsprechenden Kanälen (104) in Bezug auf die Vorwärtsbewegungsrichtung der leeren Artikel (2) auf den entsprechenden Kanälen (104) beschickt werden können; und
mindestens einer der Sitze (17) beim Betrieb leer läuft, wenn er nicht mit dem entsprechenden leeren Artikel (2) beschickt wird;
wobei die Steuereinheit (114) dazu programmiert ist, die Geschwindigkeit des Kettenförderers (4) anzupassen, sobald der mindestens eine leere Sitz (17), der dem Kanal (104) entspricht, der keine Artikel (2) zuführt, die Auslassstation (O) erreicht.

9. Verfahren zum Waschen einer Vielzahl von leeren Artikeln (2), umfassend die Schritte:
i) Vorwärtsbewegen einer Vielzahl von Reihen (101) leerer Artikel (2) entlang entsprechender Zuführkanäle (104);
ii) zyklisches Fördern der zu waschenden leeren Artikel (2) zwischen einer Einlassstation (I) und einer Auslassstation (O) mittels eines Kettenförderers (4) mit Sitzen (17); und
iii) Beschicken der Sitze (17) des Kettenförderers (4) an der Einlassstation (I) mit entsprechenden Sequenzen (21) eines oder mehrerer leerer Artikel (2);
iv) Ermitteln der Anzahl der Sitze (17), die die Artikel (2) nicht empfangen;
**gekennzeichnet durch** Umfassen der Schritte:
v) Anpassen der Geschwindigkeit des Kettenförderers (4) basierend auf der Anzahl der Sitze (17), die die Artikel (2) nicht empfangen, vorzugsweise so, dass der Durchsatz der Wascheinheit (1) konstant gehalten wird.

10. Verfahren gemäß Anspruch 9, **dadurch gekennzeichnet, dass** es den Schritt vi) des Erfassens einer Größe umfasst, die der Anzahl (N) von Zuführkanälen (104) zugeordnet ist, die an der Einlassstation (I) daran gehindert werden, den Kettenförderer (4) mit entsprechenden Sequenzen (21) von einem oder mehreren leeren Artikeln (2) zu beschicken.

11. Verfahren gemäß Anspruch 9 oder 10, **dadurch gekennzeichnet, dass** es einen Schritt vii) des Erzeugens eines Warnsignals umfasst, falls die Geschwindigkeit des Kettenförderers (4) größer als ein Schwellenwert ist.

12. Verfahren gemäß einem der Ansprüche 9 bis 11, **dadurch gekennzeichnet, dass** es einen Schritt viii) des kontinuierlichen Anpassens der Geschwindigkeit umfasst.

13. Verfahren gemäß einem der Ansprüche 9 bis 12, **dadurch gekennzeichnet, dass** der Schritt iv) die Schritte umfasst:
ix) Erfassen des Vorhandenseins und/oder der korrekten Position der leeren Artikel (2) auf den Kanälen (104) und Erzeugen relativer Signale im Falle des Fehlens der leeren Artikel (2) und/oder einer falschen Position der leeren Artikel (2); und
x) Verhindern, dass die leeren Artikel (2) auf den entsprechenden Kanälen (104) vorwärts bewegt werden, wenn die Signale erzeugt werden.

14. Verfahren gemäß einem der Ansprüche 9 bis 13, **dadurch gekennzeichnet, dass** es den Schritt xi) des Trennens der Sequenzen (21) von den Reihen (101) und des Beförderns der Sequenzen an die Einlassstation (I) umfasst.

15. Verfahren gemäß Anspruch 14 bei Abhängigkeit von Anspruch 13, **dadurch gekennzeichnet, dass** der Schritt xi) an einem Ende (130) des entsprechenden Kanals (104) angrenzend an die Sequenziervorrichtung (105) ausgeführt wird.

16. Verfahren gemäß Anspruch 15, **dadurch gekennzeichnet, dass** der Schritt iii) einen Schritt xii) des Beschickens des Kettenförderers (4) an der Einlassstation (I) mit den Sequenzen (21) umfasst, die aus den vordersten leeren Artikeln (2) der Reihen (101) gebildet werden, wobei anhand der Vorwärtsbewegungsrichtung der leeren Artikel (2) entlang der Kanäle (104) vorgegangen wird;
wobei das Verfahren ferner die Schritte umfasst:
xiii) Zuführen der am weitesten vorne liegenden Artikel (2), die in die richtige Position gebracht wurden, zu den entsprechenden Sitzen (17) des Kettenförderers (104);
xiv) Fördern mindestens eines der Sitze (17) als leer, wenn mindestens ein entsprechender vorderster leerer Artikel (2) daran gehindert wird, sich auf dem Förderer (103) vorwärts zu bewegen; und
xv) Anpassen der Geschwindigkeit, sobald der leere Sitz (17), der die Kanäle (104) entspricht, die keine Artikel (2) zuführen, die Auslassstation (O) erreicht.

## Revendications

1. Unité de lavage (1) pour traiter des articles vides (2), comprenant :
- une pluralité de canaux d'alimentation (104) pour faire avancer des rangées respectives (101) formées chacune d'une pluralité respective desdits articles vides (2) ; et
- un convoyeur à chaîne (4) avec des sièges (17) et mobile cycliquement entre une station d'entrée (I) au niveau de laquelle lesdits sièges (17) sont alimentés, lors de l'utilisation, par lesdits canaux d'alimentation (104) avec des séquences respectives (21) d'un ou de plusieurs desdits articles vides (2) à laver et une station de sortie (O) au niveau de laquelle il décharge, lors de l'utilisation, lesdits articles vides lavés (2) ;
- un groupe de capteurs (30) pour capter le nombre de sièges (17) qui ne reçoivent pas lesdits articles (2) ; **caractérisée en ce qu'**elle comprend :
- une unité de commande (114) connectée fonctionnellement audit groupe de capteurs (30) et audit convoyeur à chaîne (4) et programmée pour ajuster la vitesse dudit convoyeur à chaîne (4) sur la base dudit nombre de sièges (17) qui ne reçoivent pas lesdits articles (2), préférablement de façon à maintenir constant le volume traité de ladite unité de lavage (1).

2. Unité de lavage selon la revendication 1, **caractérisée en ce que** ledit groupe de capteurs (30) est conçu pour détecter une quantité associée au nombre (N) de canaux d'alimentation (104) empêchés, lors de l'utilisation, au niveau de ladite station d'entrée (I), d'alimenter ledit convoyeur à chaîne (4) avec ladite séquence respective (21).

3. Unité de lavage selon la revendication 1 ou la revendication 2, **caractérisée en ce que** ladite unité de commande (114) est configurée pour générer un signal d'avertissement, au cas où la vitesse dudit convoyeur à chaîne (4) nécessaire pour maintenir constant ledit volume traité est supérieure à une valeur seuil.

4. Unité de lavage selon l'une quelconque des revendications précédentes, **caractérisée en ce que** ladite unité de commande (114) est configurée pour ajuster de façon continue la vitesse dudit convoyeur à chaîne (14).

5. Unité de lavage selon l'une quelconque des revendications précédentes, **caractérisée en ce que** ledit groupe de capteurs (30) comprend :
- une pluralité de capteurs (110), qui sont configurés pour détecter la présence et/ou la position correcte desdits articles vides (2) sur lesdits canaux (104) et sont configurés pour générer lesdits signaux respectifs en cas d'absence desdits articles vides (2) et/ou de mauvaise position desdits articles vides (2) ; et
- une pluralité de dispositifs d'arrêt (120), qui sont connectés fonctionnellement auxdits capteurs respectifs (110) et peuvent être déplacés dans des positions d'arrêt respectives, dans lesquelles ils empêchent lesdits articles vides (2) d'avancer sur lesdits canaux respectifs (104) si lesdits capteurs respectifs (110) génèrent lesdits signaux respectifs ;
lesdits capteurs (110) et lesdits dispositifs d'arrêt (120) étant connectés fonctionnellement à ladite unité de commande (114).

6. Unité de lavage selon l'une quelconque des revendications précédentes, **caractérisée en ce qu'**elle comprend un dispositif de séquençage (105) qui est conçu pour séparer lesdites séquences (21) desdites rangées (101) et pour convoyer lesdites séquences (21) vers ladite station d'entrée (I).

7. Unité de lavage selon la revendication 6, lorsqu'elle dépend de la revendication 5, **caractérisée en ce que** chaque dit dispositif d'arrêt (120) est configuré pour stopper lesdits articles vides (2) de ladite rangée respective (101) au niveau d'une extrémité (130) dudit canal respectif (104) adjacent audit dispositif de séquençage (105).

8. Unité de lavage selon la revendication 7, **caractérisée en ce que** chaque dite séquence (21) est formée uniquement par un article vide le plus en avant (2) de ladite rangée relative (101), par rapport au sens d'avancée desdits articles (2) sur ledit canal relatif (104) ;
ledit convoyeur à chaîne (4) comprenant une pluralité de sièges (17) qui peuvent être alimentés avec des articles vides les plus en avant respectifs (2) de canaux respectifs (104), par rapport au sens d'avancée desdits articles vides (2) sur lesdits canaux respectifs (104) ; et
au moins l'un desdits sièges (17) se déplaçant, lors de l'utilisation, vide au cas où il n'est pas alimenté avec ledit article vide respectif (2) ;
ladite unité de commande (114) étant programmée pour ajuster ladite vitesse dudit convoyeur à chaîne (4) dès que ledit au moins un siège vide (17), correspondant au canal (104) qui n'alimente en articles (2), atteint ladite station de sortie (O).

9. Procédé de lavage d'une pluralité d'articles vides (2), comprenant les étapes consistant à :
i) faire avancer une pluralité de rangées (101) d'articles vides (2) le long de canaux d'alimentation respectifs (104) ;
ii) convoyer cycliquement lesdits articles vides (2) à laver entre une station d'entrée (I) et une station de sortie (O) au moyen d'un convoyeur à chaîne (4) avec des sièges (17) ; et
iii) alimenter lesdits sièges (17) dudit convoyeur à chaîne (4) au niveau de ladite station d'entrée (I) avec des séquences respectives (21) d'un ou de plusieurs desdits articles vides (2) ;
iv) détecter le nombre desdits sièges (17) qui ne reçoivent pas lesdits articles (2) ;
**caractérisé en ce qu'**il comprend les étapes consistant à :
v) ajuster la vitesse dudit convoyeur à chaîne (4) sur la base dudit nombre de sièges (17) qui ne reçoivent pas lesdits articles (2), préférablement de façon à maintenir constant le volume traité de ladite unité de lavage (1).

10. Procédé selon la revendication 9, **caractérisé en ce qu'**il comprend l'étape vi) consistant à détecter une quantité associée au nombre (N) de canaux d'alimentation (104) empêchés, au niveau de ladite station d'entrée (I), d'alimenter ledit convoyeur à chaîne (4) avec des séquences respectives (21) d'un ou de plusieurs desdits articles vides (2).

11. Procédé selon la revendication 9 ou la revendication 10, **caractérisé en ce qu'**il comprend une étape vii) consistant à générer un signal d'avertissement au cas où la vitesse dudit convoyeur à chaîne (4) est supérieure à une valeur seuil.

12. Procédé selon l'une quelconque des revendications 9 à 11, **caractérisé en ce qu'**il comprend une étape viii) consistant à ajuster de façon continue ladite vitesse.

13. Procédé selon l'une quelconque des revendications 9 à 12, **caractérisé en ce que** ladite étape iv) comprend les étapes consistant à :
ix) détecter la présence et/ou la position correcte desdits articles vides (2) sur lesdits canaux (104) et générer des signaux relatifs en cas d'absence desdits articles vides (2) et/ou de mauvaise position desdits articles vides (2) ; et
x) empêcher lesdits articles vides (2) d'avancer sur lesdits canaux respectifs (104) si lesdits signaux sont générés.

14. Procédé selon l'une quelconque des revendications 9 à 13, **caractérisé en ce qu'**il comprend l'étape xi) consistant à séparer lesdites séquences (21) desdites rangées (101) et à convoyer lesdites séquences vers ladite station d'entrée (I).

15. Procédé selon la revendication 14, lorsqu'elle dépend de la revendication 13, **caractérisé en ce que** ladite étape xi) est réalisée au niveau d'une extrémité (130) dudit canal respectif (104) adjacent audit dispositif de séquençage (105).

16. Procédé selon la revendication 15, **caractérisé en ce que** ladite étape iii) comprend une étape xii) consistant à alimenter ledit convoyeur à chaîne (4) au niveau de ladite station d'entrée (I) avec lesdites séquences (21) formées desdits articles vides les plus en avant (2) desdites rangées (101), en procédant selon le sens d'avancée desdits articles vides (2) le long desdits canaux (104) ;
ledit procédé comprenant en outre les étapes consistant à :
xiii) alimenter des sièges respectifs (17) dudit convoyeur à chaîne (104) avec lesdits articles les plus en avant (2) réglés dans ladite position correcte ;
xiv) convoyer comme vide au moins un dit siège (17) si au moins un article vide le plus en avant correspondant (2) est empêché d'avancer sur ledit convoyeur (103) ;
et
xv) ajuster ladite vitesse dès que ledit siège vide (17), correspondant aux canaux (104) qui n'alimentent pas en articles (2), atteint ladite station de sortie (O).
